# FASCICULE DE BREVET EUROPEEN

(11) **EP 2 010 007 B1**
(45) Date de publication et mention de la délivrance du brevet: **12.01.2011**
(21) Numéro de dépôt: 07727862.0
(22) Date de dépôt: 05.04.2007
(51) Int. Cl.: A23L 1/187, A23C 9/154, A23L 1/0524

(54) **COMPOSITION ALIMENTAIRE LACTEE CUITE, A TENEUR DIMINUEE EN OEUFS ET COMPRENANT DES PECTINES**
PEKTINHALTIGE, GEGARTE MILCHNAHRUNGSZUSAMMENSETZUNG MIT REDUZIERTEM EIGEHALT
COOKED MILK FOOD COMPOSITION WITH A REDUCED EGG CONTENT AND COMPRISING PECTINS

(30) Priorité: 06.04.2006 FR 0651231
(43) Date de publication de la demande: 07.01.2009
(73) Titulaire: Nestec S.A., 1800 Vevey (CH)
(72) Inventeur: SERRE, Jean-Emmanuel, 14100 Le Mesnil-Eudes (FR); MUNCK, Michel, 14100 Lisieux (FR)
(86) Numéro de dépôt international: PCT/EP2007/053394
(87) Numéro de publication internationale: WO 2007/113328

(56) Documents cités:
- EP-A1- 0 616 774
- FR-A1- 2 296 376
- JP-A- 56 045 170
- US-A- 2 910 366
- US-A- 3 409 443
- US-A- 4 919 958

## Description

L'invention concerne une composition alimentaire lactée cuite, à teneur diminuée en oeufs et comprenant au moins une pectine.

Les compositions alimentaires lactées contenant des oeufs cuites au four, comme par exemple les entremets aux oeufs ou les desserts lactés tels que les petits pots de crème, éventuellement aromatisés, sont en général à base d'oeufs entiers et de crème. La texturation peut être améliorée par l'ajout d'agents épaississants et/ou gélifiants, tels que par exemple, des galactomannanes, des pectines, des alginates, des carraghénanes, de la gomme de xanthane, de la gélatine et/ou des amidons.

De telles compositions sont par exemple décrites dans FR 2296376; US 3409443; et US 2910366.

Cependant, la proportion d'oeufs joue un rôle important dans la texturation. Sur le plan économique, il est recherché de diminuer cette teneur, tout en maintenant la qualité de texture obtenue, en particulier en sortie de four.

Or, il s'avère que la seule augmentation de la teneur en agents texturants ne permet pas de maintenir cette qualité lorsqu'on diminue significativement la teneur en oeufs.

Le problème technique à résoudre consiste donc à diminuer la teneur en oeufs d'une composition alimentaire lactée cuite contenant des oeufs, tout en conservant les qualités de texture obtenues avec une proportion supérieure d'oeufs entiers, en particulier en sortie de cuisson.

On a maintenant trouvé que l'addition de pectines associée à un traitement thermique permettait d'obtenir une composition alimentaire lactée cuite contenant des oeufs ayant la texture souhaitée en sortie de cuisson, notamment ayant une résistance aux chocs convenable, tout en permettant de diminuer significativement la quantité d'oeufs dans ladite composition.

De manière inattendue, on a en effet trouvé qu'en l'absence de traitement thermique, on n'obtenait pas la texture souhaitée, ce qui distingue cette utilisation des pectines des utilisations gélifiantes ou épaississants connues dans le domaine alimentaire.

On a également trouvé que l'effet texturant ne pouvait être obtenu en l'absence d'oeuf, contrairement à ce qu'on peut observer en utilisant des hydrocolloïdes gélifiants tels que les carraghénanes ou la caroube, qui interagissent avec les protéines du lait et peuvent présenter des propriétés gélifiantes en absence d'oeuf.

Sans être lié par un mécanisme d'action, on peut émettre l'hypothèse que l'effet obtenu résulte d'une synergie entre la pectine et les protéines de l'oeuf au cours du traitement thermique.

Les pectines sont des polymères d'acide D-galacturonique dont les unités sont liées entre elles par des liaisons glycosidiques 1→ 4, extraits de végétaux, notamment de l'écorce de citrus, de marc de pomme ou de betterave. Cet enchaînement peut être interrompu par des unités méthylpentose ou L-rhamnose, ainsi que par des branches ramifiées de sucre neutres, tels que des galactoses, des arabinoses ou des xyloses.

Les pectines sont en général caractérisées par leur teneur en acide galacturonique, leur longueur de chaîne et leur nombre de substituants non-osidiques. Elles sont également caractérisées par leur degré de méthylation, qui définit le pourcentage d'acide galacturonique sous forme d'ester méthylique.

En fonction de cette estérification, on distingue les pectines à haut degré de méthylation ou pectines HM (pour « high methyl »), qui ont un degré d'estérification supérieur à 50% (c'est-à-dire que plus de 50% des acides glucuroniques sont méthylés), et les pectines à faible degré de méthylation ou pectines LM (pour « low methyl »), qui ont un degré d'estérification inférieur à 50% (c'est-à-dire que moins de 50% des acides glucuroniques sont méthylés).

Les pectines sont largement utilisées dans les produits alimentaires, par exemple en tant qu'agent de prise dans des produits en conserves, des confitures ou des gelées ; en tant qu'agent stabilisant dans les jus de fruits ; en tant qu'agent émulsifiant dans des huiles minérales, des mayonnaises ou des substituts d'oeufs ; ou encore en boulangerie ou en pâtisserie en tant qu'agent rétenteur d'eau ou en tant qu'agent de charge.

Toutefois, aucune de ces utilisations ne suggère de combiner, dans une composition alimentaire lactée contenant des oeufs, l'ajout de pectine, la réduction de la teneur en oeufs et un traitement thermique, en vue d'obtenir une composition alimentaire lactée cuite contenant des oeufs à teneur en oeufs réduite, tout en conservant une texture satisfaisante tant sur le plan qualitatif (goût du consommateur), que sur le plan industriel (résistance aux chocs, notamment pendant l'emballage et le transport).

L'invention concerne donc, selon un premier aspect, une composition alimentaire lactée cuite contenant des oeufs, qui contient au moins une pectine, dans laquelle le rapport pondéral oeufs /pectine est d'environ 5/1 à 40/1, notamment d'environ 5/1 à 20/1, ladite composition étant cuite à une température égale ou supérieure à 70°C.

Cette selon l'invention est dépourvue d'anions séquestrants ou de composés contenant des anions séquestrants, couramment utilisés dans le domaine alimentaire pour diminuer la réactivité de la pectine.

De préférence, la teneur en oeufs dans la composition est inférieure ou égale à 14%, notamment de 10 à 14%, en particulier d'au moins 2% et inférieure ou égale à 14%, notamment inférieure à 12%, par rapport au poids de la totalité des ingrédients dans la composition. Avantageusement, la teneur en oeufs est de l'ordre de 2 à 10%, notamment de 3 à 10% par rapport au poids de la totalité des ingrédients dans la composition.

Par « oeufs », on entend aussi bien des oeufs entiers, que des constituants d'oeufs, blanc ou jaune d'oeuf.

Par « teneur en oeufs réduite », on entend une réduction d'au moins 20%, de préférence d'au moins 50%, voire jusqu'à 70% de la quantité d'oeufs qui serait utilisée en l'absence de pectine dans la composition.

Ladite composition alimentaire lactée peut contenir environ 50 à 80% en poids d'au moins un composant à base de lait, par rapport au poids total de la composition. Par « composant à base de lait », on entend par exemple du lait, celui-ci étant entier, partiellement écrémé ou totalement écrémé, éventuellement reconstitué sous forme de poudre, ou encore de la crème.

Avantageusement, la teneur en pectine est de l'ordre de 0,3 à 1%, par rapport au poids de la totalité des ingrédients dans la composition.

Les pectines utilisées peuvent être à faible degré de méthylation (pectines LM), provenant par exemple de pomme ou de citron, ou à haut degré de méthylation (pectines HM), les pectines LM étant préférées.

On peut également utiliser un mélange de pectines LM et de pectines HM.

La composition alimentaire selon l'invention peut, en outre, comprendre un ou plusieurs ingrédients usuels dans le domaine, choisis, par exemple, parmi les colorants naturels ou artificiels ou les arômes naturels ou artificiels.

Elle peut également contenir des additifs solides sous forme particulaire tels que, par exemple des fragments de fruits secs ou confits ; des fragments de noix, de noisettes, d'amandes, d'écorces d'agrumes ; des céréales, des vermicelles de confiserie etc.

Elle peut également contenir un ou plusieurs additifs alimentaires, tels que des agents épaississants et/ou gélifiants et/ou texturants, par exemple, des galactomannanes, des alginates, des carraghénanes, de la gomme de xanthane, de la gélatine et/ou des amidons, et/ou des agents conservateurs.

La composition alimentaire selon l'invention peut être, par exemple, un dessert de type entremets aux oeufs, ou un petit pot de crème, aromatisé ou non.

L'invention concerne également, selon un aspect ultérieur, un procédé de préparation d'une composition alimentaire telle que décrite ci-dessus, comprenant les étapes consistant à :
- préparer un mélange comprenant des oeufs, au moins un composant à base de lait et au moins une pectine, et
- soumettre ledit mélange à une cuisson à une température égalé ou supérieure à 70°C.

Ladite composition est dépourvue d'anions séquestrants ou de composés contenant des anions séquestrants.

De préférence, dans le mélange comprenant des oeufs, au moins un composant à base de lait et au moins une pectine, la teneur en oeufs est inférieure ou égale à 14%, notamment de 10 à 14%, en particulier d'au moins 2% et inférieure ou égale à 14%, de préférence inférieure ou égale à 12%, par rapport au poids de la totalité des ingrédients.

Avantageusement, ledit mélange comprend de 2 à 10%, notamment de 3 à 10% en poids d'oeufs, par rapport au poids de la totalité des ingrédients.

Selon un aspect préféré, ledit mélange comprend de 0,3 à 1% en poids de pectine par rapport au poids de la totalité des ingrédients.

La cuisson peut être réalisée en l'absence d'agitation, par exemple, dans un four, notamment dans un four à flux d'air sec ou humide, dans une étuve ou dans un bain-marie, en batch ou en continu.

Avantageusement, lors d'une cuisson en continu, la composition est statique dans le pot.

La température de cuisson peut être, par exemple, de l'ordre de 70 à 160 °C, en particulier de l'ordre de 70 à 100 °C.

La durée de cuisson est variable selon le type de composition alimentaire, et peut être, par exemple, de l'ordre de 15 à 45 min.

Avantageusement, la cuisson sera effectuée sans agitation dans un four à flux d'air sec enrichi en humidité, comme décrit par exemple dans la demande EP-A-922 393. Le taux d'humidité peut être, par exemple, de l'ordre de 60 à 95°C de température humide.

Après cuisson, la composition alimentaire est mise à refroidir, puis réfrigérée, par exemple à une température d'environ 4°C.

L'invention concerne également une composition alimentaire lactée cuite contenant des oeufs, susceptible d'être obtenue par le procédé décrit ci-dessus.

L'invention concerne également l'utilisation d'une composition alimentaire lactée cuite contenant des oeufs telle que décrite ci-dessus pour réduire la teneur en oeufs dans une composition alimentaire lactée cuite en contenant. En particulier, l'invention concerne également, selon un aspect ultérieur, un procédé de réduction de la teneur en oeufs dans une composition alimentaire lactée cuite en contenant, comprenant la préparation d'un mélange comprenant des oeufs, au moins un composant à base de lait et au moins une pectine, dans lequel le rapport pondéral oeufs / pectine est d'environ 5/1 à 40/1, notamment d'environ 5/1 à 20/1, et au moins une étape de cuisson de la composition comprenant ledit mélange.

Dans ledit procédé, les différents paramètres relatifs aux composants du mélange comprenant des oeufs, au moins un composant à base de lait et au moins une pectine, ou aux conditions de cuisson peuvent être choisis parmi ceux définis plus haut dans la présente description.

L'invention est illustrée de manière non limitative par les exemples ci-dessous.

### Exemple 1 : préparation de petits pots de crème

On a préparé des petits pots de crème dont la composition est indiquée dans le tableau 1 ci-dessous :

**Tableau 1**

| **Ingrédients** | **% en poids** |
|---|---|
| Lait entier 3,5% MG | 55-65 |
| Poudre de lait | 3 |
| Sirop de glucose | 1 à 3 |
| Sucre | 10 à 12 |
| Amidon natif maïs | 0,5 à 1,5 |
| Crème (45,6 % MG) | 10 |
| Huile de palme | 2 |
| OEufs entiers | 5 |
| Arôme | 0,7 à 1,2 |
| Pectine LM (LA 415, Danisco) | 0,6 |
| TOTAL | 100,00 |

On procède de la manière suivante : les ingrédients pulvérulents sont pré-mélangés, puis on humidifie le mélange avec le lait chaud puis la crème et l'huile de palme. On soumet ensuite le mélange à un traitement UHT à 130°C pendant quelques secondes. Après refroidissement à 50-70°C, on ajoute les oeufs liquides, on remplit le récipient et on cuit au four pendant 15 - 45 min à 75 -100 °C (cuisson humide).

Le récipient est ensuite scellé et emballé, puis mis à refroidir.

Le produit obtenu a une consistance équivalente à celle d'une crème aux oeufs contenant environ 12% d'oeufs, sans ajout de pectine.

### Exemple 2 : mesure de la force de gel

On a comparé la composition de l'exemple 1 (composition 1) avec 5 compositions comparatives préparées sur la base des ingrédients indiqués dans le tableau 1 de l'exemple 1, en faisant varier certains ingrédients, à savoir la pectine, le composant lacté (lait, poudre de lait et crème) et la quantité d'oeufs, de la manière suivante :
- la composition 2 est identique à la composition 1, sauf qu'elle contient 12% d'oeufs et qu'elle est dépourvue de pectine
- la composition 3 est identique à la composition 1, sauf qu'elle est dépourvue de pectine,
- la composition 4 est identique à la composition 1, sauf qu'elle est dépourvue d'oeufs,
- la composition 5 est identique à la composition 1, sauf qu'elle n'a pas été cuite, et
- la composition 6 est identique à la composition 1, sauf qu'elle est dépourvue de composant lacté.

Les compositions 1, 2, 3, 4 et 6 ont été cuites au four comme indiqué dans l'exemple 1.

On a mesuré la force de gel de chaque composition par pénétrométrie avec un appareil TAXT2i (Stable Micro System), après un jour de refroidissement à 4°C.

Le principe de la mesure consiste à évaluer la fermeté de la composition en faisant pénétrer une sonde constituée d'un cylindre en plexiglas de 25 mm de diamètre qui descend progressivement dans un pot contenant la composition à tester, placé sur un support.

Les paramètres utilisés pour le test sont les suivants :
- force de déclenchement automatique de la sonde : 0,05 N
- vitesse de la sonde pendant l'analyse : 2mm/s.
- longueur du déplacement de la sonde : 10mm.

L'appareil TAXT2i, couplé à un logiciel, permet d'enregistrer la force de résistance à la pénétration qu'oppose la composition (force de compression).

Les résultats, exprimés en grammes, sont rapportés dans le tableau 2 ci-dessous :

**Tableau 2**

| Composition | Force de gel (g) |
|---|---|
| 1 | 186 |
| 2 | 81 |
| 3 | 22 |
| 4 | 102 |
| 5 | 82 |
| 6 | 77 |

Les résultats montrent que la composition 1 selon l'invention présente la force de gel la plus élevée. Cette force de gel est supérieure à celle d'une composition contenant une quantité d'oeufs plus élevée mais dépourvue de pectine (composition 2).

De plus, les compositions 3, 4, 5 et 6 présentent également des forces en gel inférieures à celle de la composition 1.

En particulier, la composition 4 qui ne contient pas d'oeuf présente une force en gel inférieure à celle de la composition 1, ce qui montre que l'effet texturant ne peut être obtenu en l'absence d'oeuf, même en présence de lait.

## Revendications

1. Composition alimentaire lactée cuite contenant des oeufs, **caractérisée en ce que** :
- elle contient au moins une pectine,
- le rapport pondéral oeufs /pectine est d'environ 5/1 à 40/1, et
- elle est cuite à une température égale ou supérieure à 70°C,
ladite composition selon l'invention étant dépourvue d'anions séquestrants ou de composés contenant des anions séquestrants.

2. Composition alimentaire selon la revendication 1, **caractérisée en ce que** la teneur en oeufs est inférieure ou égale à 14%, de préférence inférieure ou égale à 12%, par rapport au poids de la totalité des ingrédients.

3. Composition alimentaire selon les revendications 1 ou 2, **caractérisée en ce que** la teneur en oeufs est d'au moins 2% et inférieure ou égale à 14%, de préférence inférieure ou égale à 12%, par rapport au poids de la totalité des ingrédients.

4. Composition alimentaire selon l'une quelconque des revendications 1 à 3, **caractérisée en ce que** la teneur en oeufs est de l'ordre de 2 à 10% par rapport au poids de la totalité des ingrédients.

5. Composition alimentaire selon l'une quelconque des revendications 1 à 4, **caractérisée en ce que** la teneur en pectine est de l'ordre de 0,3 à 1%, par rapport au poids de la totalité des ingrédients.

6. Composition alimentaire selon l'une quelconque des revendications 1 à 5, **caractérisée en ce que** le rapport pondéral oeufs /pectine est d'environ 5/1 à 20/1.

7. Composition alimentaire selon l'une quelconque des revendications 1 à 6, **caractérisée en ce qu'**elle comprend au moins une pectine choisie parmi les pectines à faible degré de méthylation, les pectines à haut degré de méthylation et leurs mélanges.

8. Composition alimentaire selon l'une quelconque des revendications 1 à 7, **caractérisée en ce qu'**elle comprend environ 50 à 80% d'au moins un composant à base de lait, par rapport au poids de la totalité des ingrédients.

9. Composition alimentaire selon l'une quelconque des revendications 1 à 8, **caractérisée en ce qu'**elle consiste en un dessert de type entremets aux oeufs, ou en un petit pot de crème, aromatisé ou non.

10. Composition alimentaire selon l'une quelconque des revendications 1 à 9, **caractérisée en ce qu'**elle est cuite en l'absence d'agitation.

11. Composition alimentaire selon l'une quelconque des revendications 1 à 10, **caractérisée en ce qu'**elle est cuite dans un four, dans une étuve ou dans un bain-marie, en batch ou en continu.

12. Procédé de préparation d'une composition alimentaire selon l'une quelconque des revendications 1 à 11 **caractérisé en ce qu'**il comprend les étapes consistant à :
- préparer un mélange comprenant des oeufs, au moins un composant à base de lait et au moins une pectine, et
- soumettre ledit mélange à une cuisson à une température égale ou supérieure à environ 70°C.

13. Procédé selon la revendication 12, **caractérisé en ce que**, dans le mélange comprenant des oeufs, au moins un composant à base de lait et au moins une pectine, la teneur en oeufs est inférieure ou égale à 14%, de préférence inférieure ou égale à 12%, par rapport au poids de la totalité des ingrédients.

14. Procédé selon l'une des revendications 12 ou 13, **caractérisé en ce que**, dans le mélange comprenant des oeufs, au moins un composant à base de lait et au moins une pectine, la teneur en oeufs est d'au moins 2% et inférieure ou égale à 14%, de préférence inférieure ou égale à 12%, par rapport au poids de la totalité des ingrédients.

15. Procédé selon l'une quelconque des revendications 12 à 14, **caractérisé en ce que** le mélange comprenant des oeufs, au moins un composant à base de lait et au moins une pectine comprend de 2 à 10% en poids d'oeufs, par rapport au poids de la totalité des ingrédients.

16. Procédé selon l'une quelconque des revendications 12 à 15, **caractérisé en ce que** le mélange comprenant des oeufs, au moins un composant à base de lait et au moins une pectine comprend de 0,3 à 1 % en poids de pectine par rapport au poids de la totalité des ingrédients.

17. Procédé selon l'une quelconque des revendications 12 à 16, **caractérisé en ce que** la cuisson est réalisée en l'absence d'agitation.

18. Procédé selon l'une quelconque des revendications 12 à 17, **caractérisé en ce que** la cuisson est réalisée dans un four, dans une étuve ou dans un bain-marie en batch ou en continu..

19. Procédé selon l'une quelconque des revendications 12 à 18, **caractérisé en ce que** la cuisson est réalisée à une température de l'ordre de 70 à 160°C, de préférence de l'ordre de 70 à 100°C.

20. Procédé selon la revendication 19, **caractérisé en ce que** la cuisson est réalisée dans un four à flux d'air sec ou dans un four à flux d'air enrichi en humidité.

21. Composition alimentaire susceptible d'être obtenue par le procédé selon l'une quelconque des revendications 12 à 20.

22. Utilisation d'une composition alimentaire lactée cuite contenant des oeufs selon l'une quelconque des revendications 1 à 11 pour réduire la teneur en oeufs dans une composition alimentaire lactée cuite en contenant.

23. Procédé de réduction de la teneur en oeufs dans une composition alimentaire lactée cuite en contenant, **caractérisé en ce qu'**il comprend la préparation d'un mélange comprenant des oeufs, au moins un composant à base de lait et au moins une pectine, dans lequel le rapport pondéral oeufs / pectine est d'environ 5/1 à 40/1, et au moins une étape'de cuisson de la composition comprenant ledit mélange.

## Claims

1. A cooked milk food composition containing eggs, **characterized in that**:
- it contains at least one pectin,
- the egg/pectin weight ratio is of about 5/1 to 40/1, and
- it is cooked at a temperature of 70°C or more,
wherein said composition of the present invention is free of sequestering anions or of compounds containing sequestering anions.

2. The food composition of claim 1, **characterized in that** the egg content is 14% or less, and preferably 12% or less, of the total weight of ingredients.

3. The food composition of claims 1 or 2, **characterized in that** the egg content is at least 2% and is 14% or less, and preferably 12% or less, of the total weight of ingredients.

4. The food composition of any one of claims 1 to 3, **characterized in that** the egg content ranges from 2 to 10% of the total weight of ingredients.

5. The food composition of any one of claims 1 to 4, **characterized in that** the pectin content ranges from 0.3 to 1% of the total weight of ingredients.

6. The food composition of any one of claims 1 to 5, **characterized in that** the egg/pectin weight ratio is of about 5/1 to 20/1.

7. The food composition of any one of claims 1 to 6, **characterized in that** it comprises at least one pectin selected from the group consisting of pectins having a low methylation degree, pectins having a high methylation degree, and mixtures thereof.

8. The food composition of any one of claims 1 to 7, **characterized in that** it comprises about 50 to 80% of at least one milk based component, with respect to the total weight of ingredients.

9. The food composition of any one of claims 1 to 8, **characterized in that** it is an egg based dessert of the pudding type or a small custard ramekin, whether flavored or not.

10. The food composition of any one of claims 1 to 9, **characterized in that** it is cooked without stirring.

11. The food composition of any one of claims 1 to 10, **characterized in that** it is cooked in an oven, a stove, a double boiler, batchwise or continuously.

12. A method for preparing a food composition of any one of claims 1 to 11, **characterized in that** it comprises the steps of:
- preparing a mixture comprising eggs, at least one milk based component, and at least one pectin, and
- cooking said mixture at a temperature of about 70°C or more.

13. The method according to claim 12, **characterized in that**, in the mixture which comprises eggs, at least one milk based component, and at least one pectin, the egg content is 14% or less, preferably 12% or less, of the total weight of ingredients.

14. The method of any one of claims 12 to 13, **characterized in that**, in the mixture which comprises eggs, at least one milk based component, and at least one pectin, the egg content is at least 2% and is 14% or less, preferably 12% or less, of the total weight of ingredients.

15. The method of any one of claims 12 to 14, **characterized in that** the mixture which comprises eggs, at least one milk based component, and at least one pectin, comprises from 2 to 10% by weight of eggs, with respect to the total weight of ingredients.

16. The method of any one of claims 12 to 15, **characterized in that** the mixture which comprises eggs, at least one milk-based component, and at least one pectin, comprises from 0.3 to 1% of pectin, with respect to the total weight of ingredients.

17. The method of any one of claims 12 to 16, **characterized in that** the cooking is performed without stirring.

18. The method of any one of claims 12 to 17, **characterized in that** the cooking is performed in an oven, a stove or a double-boiler, batchwise or continuously.

19. The method of any one of claims 12 to 18, **characterized in that** the cooking is performed at a temperature ranging from 70 to 160°C, and preferably, ranging from 70 to 100°C.

20. The method according to claim 19, **characterized in that** the cooking is performed in a dry air oven, or in a moisture-enriched air oven.

21. A food composition obtainable through the method of any one of claims 12 to 20.

22. Use of a cooked milk food composition containing eggs of any one of claims 1 to 11, for reducing the egg content in an egg-containing cooked milk food composition.

23. A method for reducing the egg content in an egg-containing cooked milk food composition, **characterized in that** it comprises the step of preparing a mixture containing eggs, at least one milk based component and at least one pectin, wherein the egg/pectin weight ratio ranges from about 5/1 to 40/1, and at least one step of cooking the composition comprising said mixture.

## Patentansprüche

1. Gegarte, eihaltige Milchnahrungszusammensetzung, **dadurch gekennzeichnet, dass**:
- sie mindestens ein Pektin enthält,
- das Gewichtsverhältnis von Eiern zu Pektin ungefähr 5:1 bis 40:1 beträgt, und
- sie bei einer Temperatur von 70 °C oder mehr gegart wird,
wobei die erfindungsgemäße Zusammensetzung frei von komplexbildenden Anionen oder von Verbindungen ist, welche komplexbildende Anionen enthalten.

2. Nahrungszusammensetzung gemäß Anspruch 1, **dadurch gekennzeichnet, dass** der Eigehalt weniger als oder gleich 14% beträgt, vorzugsweise weniger als oder gleich 12%, bezogen auf das Gewicht aller Zutaten.

3. Nahrungszusammensetzung gemäß Anspruch 1 oder 2, **dadurch gekennzeichnet, dass** der Eigehalt mindestens 2 % beträgt und weniger als oder gleich 14%, vorzugsweise weniger als oder gleich 12%, bezogen auf das Gewicht aller Zutaten beträgt.

4. Nahrungszusammensetzung gemäß einem der Ansprüche 1 bis 3, **dadurch gekennzeichnet, dass** der Eigehalt im Bereich von 2 bis 10% bezogen auf das Gewicht aller Zutaten liegt.

5. Nahrungszusammensetzung gemäß einem der Ansprüche 1 bis 4, **dadurch gekennzeichnet, dass** der Pektingehalt im Bereich von 0.3 bis 1% bezogen auf das Gewicht aller Zutaten liegt.

6. Nahrungszusammensetzung gemäß einem der Ansprüche 1 bis 5, **dadurch gekennzeichnet, dass** das Gewichtsverhältnis von Eiern zu Pektin ungefähr 5:1 bis 20:1 beträgt.

7. Nahrungszusammensetzung gemäß einem der Ansprüche 1 bis 6, **dadurch gekennzeichnet, dass** sie zumindest ein Pektin ausgewählt aus den Pektinen mit niedrigem Methylierungsgrad, aus den Pektinen mit hohem Methylierungsgrad und ihren Mischungen enthält.

8. Nahrungszusammensetzung gemäß einem der Ansprüche 1 bis 7, **dadurch gekennzeichnet, dass** sie ungefähr 50 bis 80% an mindestens einem Milchbestandteil bezogen auf das Gewicht aller Zutaten enthält.

9. Nahrungszusammensetzung gemäß einem der Ansprüche 1 bis 8, **dadurch gekennzeichnet, dass** sie aus einem Dessert in der Art einer Eiersüßspeise oder aus einem aromatisierten oder nicht aromatisierten Sahnetöpfchen besteht.

10. Nahrungszusammensetzung gemäß einem der Ansprüche 1 bis 9, **dadurch gekennzeichnet, dass** sie ohne Schütteln gegart wird.

11. Nahrungszusammensetzung gemäß einem der Ansprüche 1 bis 10, **dadurch gekennzeichnet, dass** sie in einem Backofen, in einem Trockenofen oder in einem Wasserbad entweder in Chargen oder kontinuierlich gegart wird.

12. Zubereitungsverfahren einer Nahrungszusammensetzung gemäß einem der Ansprüche 1 bis 11, **dadurch gekennzeichnet, dass** es folgende Schritte umfasst:
- Zubereiten einer Mischung aus Eiern, mindestens einem Milchbestandteil und mindestens einem Pektin, sowie
- Unterziehen dieser Mischung einem Garvorgang bei einer Temperatur von ca. 70°C oder mehr.

13. Verfahren gemäß Anspruch 12, **dadurch gekennzeichnet, dass** in der Mischung aus Eiern, mindestens einem Milchbestandteil und mindestens einem Pektin der Eigehalt weniger als oder gleich 14%, vorzugsweise weniger als oder gleich 12%, bezogen auf das Gewicht aller Zutaten beträgt.

14. Verfahren gemäß einem der Ansprüche 12 oder 13, **dadurch gekennzeichnet, dass** in der Mischung aus Eiern, mindestens einem Milchbestandteil und mindestens einem Pektin der Eigehalt mindestens 2% und weniger als oder gleich 14%, vorzugsweise weniger als oder gleich 12%, bezogen auf das Gewicht aller Zutaten beträgt.

15. Verfahren gemäß einem der Ansprüche 12 bis 14, **dadurch gekennzeichnet, dass** die Mischung aus Eiern, mindestens einem Milchbestandteil und mindestens einem Pektin 2 bis 10 Gewichtsprozent an Eiern bezogen auf das Gewicht aller Zutaten umfasst.

16. Verfahren gemäß einem der Ansprüche 12 bis 15, **dadurch gekennzeichnet, dass** die Mischung aus Eiern, mindestens einem Milchbestandteil und mindestens einem Pektin 0.3 bis 1 Gewichtsprozent an Pektin bezogen auf das Gewicht aller Zutaten umfasst.

17. Verfahren gemäß einem der Ansprüche 12 bis 16, **dadurch gekennzeichnet, dass** der Garvorgang ohne Schütteln durchgeführt wird.

18. Verfahren gemäß einem der Ansprüche 12 bis 17, **dadurch gekennzeichnet, dass** der Garvorgang in einem Backofen, einem Trockenofen oder in einem Wasserbad in Chargen oder kontinuierlich durchgeführt wird.

19. Verfahren gemäß einem der Ansprüche 12 bis 18, **dadurch gekennzeichnet, dass** der Garvorgang bei einer Temperatur im Bereich von 70 bis 160°C, vorzugsweise im Bereich von 70 bis 100°C durchgeführt wird.

20. Verfahren gemäß Anspruch 19, **dadurch gekennzeichnet, dass** der Garvorgang in einem Trockenluftofen oder einem mit Feuchtigkeit angereicherten Luftofen durchgeführt wird.

21. Nahrungszusammensetzung, die durch das Verfahren gemäß einem der Ansprüche 12 bis 20 erhalten werden kann.

22. Verwendung einer eierhaltigen, gegarten Milchnahrungszusammensetzung gemäß einem der Ansprüche 1 bis 11 zur Reduzierung des Eigehaltes in einer eihaltigen, gegarten Milchnahrungszusammensetzung.

23. Verfahren zur Reduzierung des Eigehaltes in einer eihaltigen, gegarten Milchnahrungszusammensetzung, **dadurch gekennzeichnet, dass** es die Zubereitung einer Mischung aus Eiern, mindestens einem Milchbestandteil und mindestens einem Pektin, in welcher das Gewichtsverhältnis von Eiern zu Pektin bei ungefähr 5:1 bis 40:1 liegt, sowie einen Garschritt der diese Mischung enthaltenden Zusammensetzung umfasst.
